# EUROPÄISCHE PATENTSCHRIFT

(11) **EP 0 621 933 B1**
(45) Veröffentlichungstag und Bekanntmachung des Hinweises auf die Patenterteilung: **17.07.1996**
(21) Anmeldenummer: 93919000.5
(22) Anmeldetag: 15.09.1993
(51) Int. Cl.: F16K 11/07, F16K 11/18

(54) **EINSATZ FÜR EIN EINHEBEL-MISCHVENTIL**
INSERT FOR A SINGLE-LEVER MIXING BATTERY
PIECE POUR MITIGEUR MONOCOMMANDE

(30) Priorität: 17.11.1992 DE 4238671
(43) Veröffentlichungstag der Anmeldung: 02.11.1994
(73) Patentinhaber: Flühs Drehtechnik GmbH., D-58515 Lüdenscheid (DE)
(72) Erfinder: VOM DAHL, Uwe, D-58511 Lüdenscheid (DE); LANGE, Peter, D-58509 Lüdenscheid (DE); ZIEBACH, Helmut, D-58515 Lüdenscheid (DE)
(74) Vertreter: Dörner, Lothar, Dipl.-Ing.
(86) Internationale Anmeldenummer: DE9300864
(87) Internationale Veröffentlichungsnummer: WO9411660

(56) Entgegenhaltungen:
- EP-A- 0 238 674
- DE-A- 2 827 236
- DE-A- 2 929 199
- FR-A- 2 470 319

## Beschreibung

Die Erfindung betrifft einen Einsatz für ein Einhebel-Mischventil mit einem ortsfesten Gehäuse, mit einer in dem Gehäuse angeordneten Innenhülse, mit einem bezogen auf das Gehäuse drehbaren und radial bewegbaren Korb, mit einer quer in der Innenhülse schwenkbar gelagerten, innen in den Korb eingreifenden und von außen betätigbaren Spindel, und mit plan aneinanderliegenden und Durchbrüche aufweisenden Scheiben, von denen eine als Einlaßscheibe ausgebildet und an dem Gehäuse, eine andere als Steuerscheibe ausgebildet und an dem Korb befestigt ist, und eine weitere als Zwischenscheibe zwischen der Einlaßscheibe und der Steuerscheibe vorgesehen ist.

Einsätze für Einhebel-Mischventile der vorgenannten Art sind bekannt (DE 28 27 236 A1; DE 29 29 199 A1). Bei den bekannten Einsätzen ist die Zwischenscheibe zusammen mit der Innenhülse bezogen auf die Einlaßscheibe drehbar. Bezogen auf die Zwischenscheibe ist die Steuerscheibe radial bewegbar. Das Mischen von Kalt- und Warmwasser zu Mischwasser erfolgt zwischen Einlaßscheibe und Zwischenscheibe; das Öffnen und Schließen des Ventils zwischen Zwischenscheibe und Steuerscheibe. Bei den bekannten Einsätzen besteht die Gefahr des sog. Überströmens: Wird nur eine geringe Menge Mischwasser entnommen, sind also die - womöglich nicht innerhalb derselben Scheibe getrennte Einlaßkanäle aufweisenden - Durchbrüche zwischen Zwischenscheibe und Steuerscheibe weitgehend verschlossen, ist die Temperatur des Mischwassers aber so gewählt, daß die Durchbrüche zwischen Einlaßscheibe und Zwischenscheibe weitgehend geöffnet sind, kann es zum Mischwasser-Rückfluß in der Wasserzuleitung geringeren Drucks kommen. Durch Einbau von Rückschlagventilen in die Zuleitungen kann dem Überströmen begegnet werden. Dies ist aber ein nicht vertretbarer Aufwand.

Hier will die Erfindung Abhilfe schaffen. Der Erfindung liegt die Aufgabe zugrunde, einen Einsatz für ein Einhebel-Mischventil der eingangs genannten Art so auszubilden, daß Überströmen nicht auftritt. Gemäß der Erfindung wird diese Aufgabe dadurch gelöst, daß die Zwischenscheibe als Volumenscheibe verwendet ist, die mit dem Korb bezogen auf die Einlaßscheibe radial bewegbar ist, und daß die Steuerscheibe als Temperaturscheibe verwendet ist, die mit dem Korb bezogen auf die Volumenscheibe drehbar und zusammen mit der Volumenscheibe bezogen auf die Einlaßscheibe drehbar und radial bewegbar ist.

Bei der Erfindung ist die Innenhülse ortsfest in dem Gehäuse angeordnet. Auf sie bezogen werden die Spindel gedreht und geschwenkt und der Korb rotatorisch und translatorisch bewegt. Die getrennnten Einlaßkanäle der Scheiben verhindern das Überströmen, ohne daß Rückschlagventile in den Zuleitungen vorhanden sind. Der maximale Drehwinkel zwischen Steuerscheibe/Zwischenscheibe und Einlaßscheibe ist einstellbar, was die Wahl einer Temperaturbegrenzung ermöglicht. Auch ist eine schlankere Bauweise des Ventils bei gleichem Volumenstrom möglich. Es eröffnen sich bessere Designmöglichkeiten für ein den Einsatz aufnehmendes Gehäuse; auch wird Material eingespart.

Ausgestaltungen und Weiterbildungen der Erfindung sind in den Unteransprüchen beschrieben.

Ein Ausführungsbeispiel der Erfindung ist in der Zeichnung dargestellt und wird nachfolgend im einzelnen beschrieben. Es zeigen in etwa 2-fach vergrößerter Darstellung:
- Fig. 1: einen Axialschnitt durch einen Einsatz für ein Einhebel-Mischventil in montiertem Zustand;
- Fig. 2: zwei um 90° gegeneinander gedrehte Axialschnitte, Querschnitte A-B sowie C-D und die Unteransicht eines Gehäuses;
- Fig. 3: eine Vorderansicht, die Seitenansicht von links, jeweils zur Hälfte im Axialschnitt, und eine Unteransicht einer Innenhülse des Einsatzes;
- Fig. 4: eine Spindel für den Einsatz in Vorderansicht, Unteransicht und Draufsicht;
- Fig. 5: ein in das Gehäuse auf der Spindelseite eingesetztes Formteil, vorzugsweise aus Kunststoff, in Seitenansicht, teilweise im Axialschnitt, und in Draufsicht:
- Fig. 6 und 7: auf die Spindel steckbare Temperaturbegrenzer in Seitenansicht, teilweise im Axialschnitt, und in Unteransicht;
- Fig. 8: einen Korb für das Gehäuse im Axialschnitt, in einer Seitenansicht von links, teilweise im Axialschnitt, und in der Unteransicht;
- Fig. 9: einen den Korb übergreifenden Gleithut im Axialschnitt und in der Draufsicht;
- Fig. 10: eine Einlaßscheibe für den Einsatz in der Unteransicht, der Draufsicht sowie in Axialschnitten A-B und C-D;
- Fig. 11: eine Temperaturscheibe für den Einsatz in der Draufsicht sowie einem Axialschnitt A-B;
- Fig. 12: eine Volumenscheibe für den Einsatz in der Seitenansicht, teilweise im Axialschnitt A-B, in der Draufsicht, der Unteransicht sowie einem Ausschnitt;
- Fig. 13: eine Formdichtung für den Einsatz in der Seitenansicht, teilweise im Axialschnitt, sowie der Unteransicht.

Der als Ausführungsbeispiel gewählte Einsatz für ein Einhebel-Mischventil weist ein ortsfestes Gehäuse 1 auf. In dem Gehäuse 1 ist eine Innenhülse 2 befestigt. Bezogen auf die Innenhülse 2 drehbar und radial bewegbar ist ein Korb 3, der in dem Gehäuse 1 unterhalb der Innenhülse 2 angeordnet ist. In der Innenhülse 2 ist dreh- und schwenkbar eine Spindel 4 gelagert. Die Spindel 4 greift innen in den Korb 3 und ist von außen betätigbar. Für die Steuerung von Menge und Temperatur des aus zufließendem Kalt- und Warmwasser gemischten und abgegebenen Mischwassers enthält der Einsatz Scheiben, die plan aneinanderliegen und Durchbrüche aufweisen. Eine der Scheiben ist als Einlaßscheibe 5 ausgebildet und an dem Gehäuse 1 befestigt. Eine weitere Scheibe ist als Temperaturscheibe 6 ausgebildet und an dem Korb 3 befestigt. Zwischen der Einlaßscheibe 5 und der Temperaturscheibe 6 ist eine Volumenscheibe 7 vorgesehen. Die Volumenscheibe 7 ist zusammen mit dem Korb 3 bezogen auf die Einlaßscheibe 5 radial, also translatorisch bewegbar. Die Temperaturscheibe 6 ist bezogen auf die Volumenscheibe 7 drehbar, also rotatorisch bewegbar, zusammen mit der Volumenscheibe 7 bezogen auf die Einlaßscheibe 5 radial, also translatorisch, bewegbar. Die Einlaßseite des Einsatzes bildet eine von dem Gehäuse 1 gehaltene elastische Dichtscheibe 8.

Das spindelseitige Ende des Einsatzes bildet eine Ringschraube 10, die in das Gehäuse 1 eingeschraubt ist. Von der Ringschraube 10 ist ein Kunststoffteil 20 gehalten, das an der spindelseitigen Stirnseite der Innenhülse 2 anliegt. Auf der dem Kunststoffteil 20 zugewandten Seite weist die Innenhülse 2 eine Innennut auf, die einen Sprengring 91 aufnimmt. Von dem Sprengring 91 sind ein Verschlußring 92 und ein Kunststoffgleitring 93 gehalten, die in Axialrichtung der Innenhülse 2 aneinander und auf einer Schulter der Innenhülse liegen. Gegenüber dem Gehäuse 1 und der Spindel 4 ist die Innenhülse 2 durch 0-Ringe 94, 95 abgedichtet. Das Gehäuse 1 und mit ihr der gesamte Einsatz ist gegenüber einem nicht dargestellten Ventil, das den Einsatz aufnimmt, mittels eines weiteren 0-Rings 97 abgedichtet. Auf das freie Ende der Spindel 4 ist ein Temperaturbegrenzer 40 gesteckt, der im Zusammenwirken mit dem Kunststoffteil 20 den Drehwinkel der Spindel 4 und damit den Öffnungsquerschnitt der Warmwasseröffnung in der Temperaturscheibe 6 begrenzt. Auf den Korb 3 ist auf der der Innenhülse 2 benachbarten Seite und an ihr anliegend ein Gleithut 30 gesteckt.

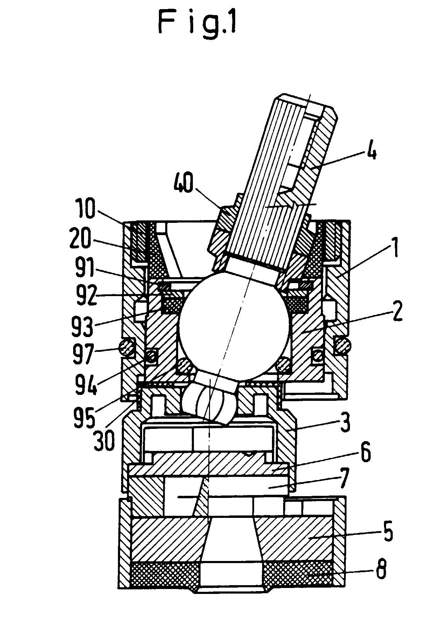

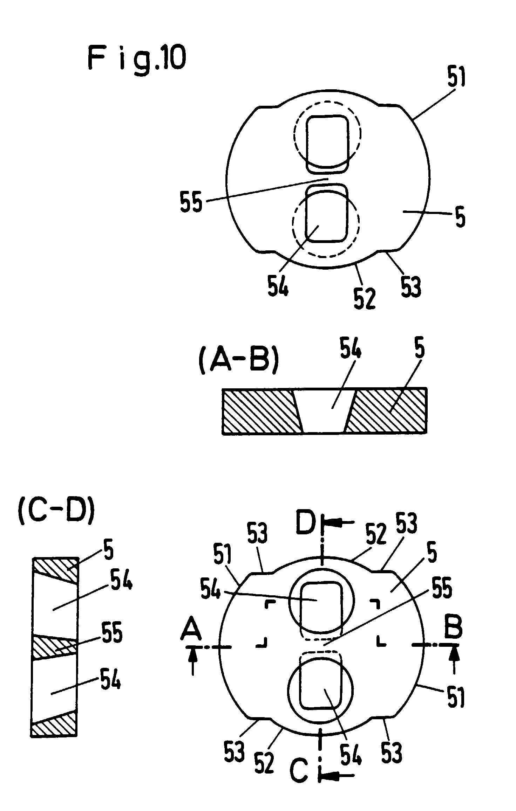

Die Einlaßscheibe 5 - vgl. Fig. 1 und 10 - ist im wesentlichen in ihrem Umriß aus Teilkreisen gebildet, nämlich zwei diametral gegenüberliegenden Teilkreisen 51 größeren Durchmessers und zwei zwischen den Teilkreisen 51 größeren Durchmessers angeordneten Teilkreisen 52 kleineren Durchmessers. Die Teilkreise 51, 52 sind durch Gerade 53 miteinander verbunden. Die Einlaßscheibe 5 weist zwei spiegelsymmetrisch zu ihrer Längsmittelachse angeordnete Durchbrüche 54 auf. Einer der beiden Durchbrüche steht mit der Kaltwasser-, der andere mit der Warmwasser-Zuleitung in Verbindung. Die Durchbrüche 54 sind auf der Unterseite der Einlaßscheibe kreisförmig, auf der Oberseite rechteckig mit abgerundeten Ecken ausgebildet. Die Durchbrüche 54 sind auf der Oberseite gegenüber der Unterseite zur Längsmittelachse versetzt angeordnet; es ergeben sich schräg verlaufende Durchbrüche 54, die in einer Querschnittsebene trapezförmig - Schnitt A-B in Fig. 10 -, in der anderen parallelogrammartig verlaufen - Schnitt C-D -. Mit ihrem Rand ist die Einlaßscheibe 5 in das Gehäuse 1 lagerichtig eingepaßt. Die Durchbrüche 54 sind durch den zwischen ihnen verbleibenden Steg 55 voneinander getrennt.

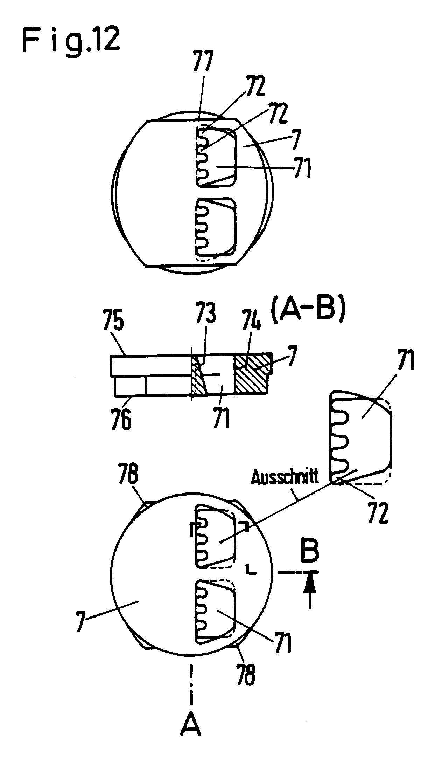

Die als Volumenscheibe 7 vorgesehene Zwischenscheibe - Fig. 1 und 12 - hat im wesentlichen Kreisform. Auf der Oberseite 75 ist die Volumenscheibe 7 als Kreisfläche, auf der Unterseite 76 als Kreisfläche größeren Durchmessers ausgeführt, die jedoch auf gegenüberliegenden Seiten nach Art einer Sekante 77 abgeschnitten ist. Es entstehen so zur Unterseite 76 hin zwei parallel zueinander verlaufende Absätze, mit denen die Volumenscheibe 7 entlang gleich ausgebildeter Flächen in dem Gehäuse 1 gleiten kann. Am Übergang von der Kreisfläche in die Sekanten 77 überragt die Unterseite 76 die Oberseite 75. Es entstehen vier überstehende Lappen 78. Spiegelsymmetrisch zur Längsmittelachse weist die Volumenscheibe 7 zwei durch einen Steg voneinander getrennnte Durchbrüche 71 auf. Jeder Durchbruch 71 hat in der Unteransicht die Form eines Rechtecks mit abgerundeten Ecken, in der Ansicht die Form eines Trapezes, dessen Grundseite senkrecht zur Längsmittelachse verläuft. Im Bereich der längeren Grundseite sind Zähne 72 ausgebildet. Die Zähne 72 verhindern Wasserschlag und Geräusche und ermöglichen die Entnahme von Minimengen. Auf der Seite der Zähne 72 ist der Durchbruch 71 mit einer zur Temperaturscheibe 6 sich öffnenden schrägen Wandung 73 versehen, im übrigen mit einer zu den Scheibenstirnflächen senkrechten Wandung 74. Der Umfang der Volumenscheibe 7 ist so gestaltet, daß ein seitenverkehrter Einbau unmöglich ist.

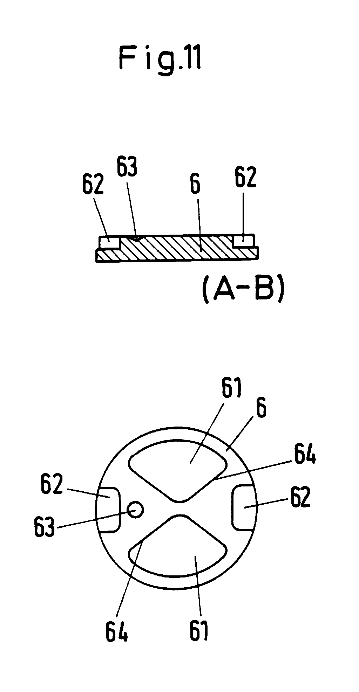

Die Temperaturscheibe 6 ist kreisförmig ausgebildet - Fig. 1 und 11 -. Sie weist zwei spiegelsymmetrisch angeordnete sektorförmige Durchbrüche 61 auf. Einer der beiden Durchbrüche steht mit der Kaltwasser-, der andere mit der Warmwasser-Zuleitung in Verbindung. Am Rand weist die Temperaturscheibe 6 zwischen den sektorförmigen Durchbrüchen 61 auf der Oberseite eingelassene Stufen 62 auf. Mit den Stufen 62 liegt die Temperaturscheibe 6 auf Schultern 31 in dem Korb 3. Die Stufen 62 sind voneinander und von den Durchbrüchen 61 getrennt. Die Wände 64 der sektorförmigen Durchbrüche 61 verlaufen senkrecht zu den Grundflächen. Für den lagerichtigen Einsatz der Temperaturscheibe 6 in das Gehäuse 1 können die Stufen 62 entgegen der genau diametralen Anordnung nach derselben Seite versetzt angeordnet sein. In der Verbindungslinie der Stufen 62 ist im Bereich der einen Stufe eine körnerartige Vertiefung 63 für den lagerichtigen Einbau vorgesehen.

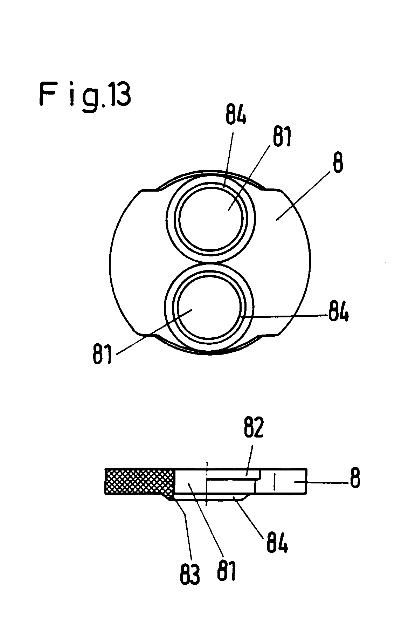

Die die Einlaßseite des Einsatzes bildende Dichtscheibe 8 liegt an der Einlaßscheibe 5 an und ist von dem Gehäuse 1 gehalten - Fig. 1 und 13 -. Die Dichtscheibe 8 weist die gleiche Kontur auf wie die Einlaßscheibe 5. Sie ist mit zwei spiegelsymmetrisch angeordneten, kreisförmigen Öffnungen 81 versehen. Die kreisförmigen Öffnungen 81 der Dichtscheibe 8 sind kongruent den kreisförmigen Durchbrüchen 54 der Einlaßscheibe 5 auf der anliegenden Seite. Auf dieser Seite ist die Dichtscheibe 8 plan ausgeführt. Auf der der Einlaßscheibe 5 abgewandten Seite ist die Dichtscheibe 8 am Rand der Durchbrüche 81 mit Lippen 84 versehen. Die Dichtscheibe 8 schließt einerseits mit den umlaufenden Lippen 84 den Kalt- und Warmwasserzulauf ab. Andererseits verhindern auf der Einlaßscheibe 5 zugewandten Seite zwei an die Kreise kleineren Durchmessers anschließende Absätze 82 das Auseinanderfallen der Teile des noch nicht in das Ventil eingebrachten Einsatzes.

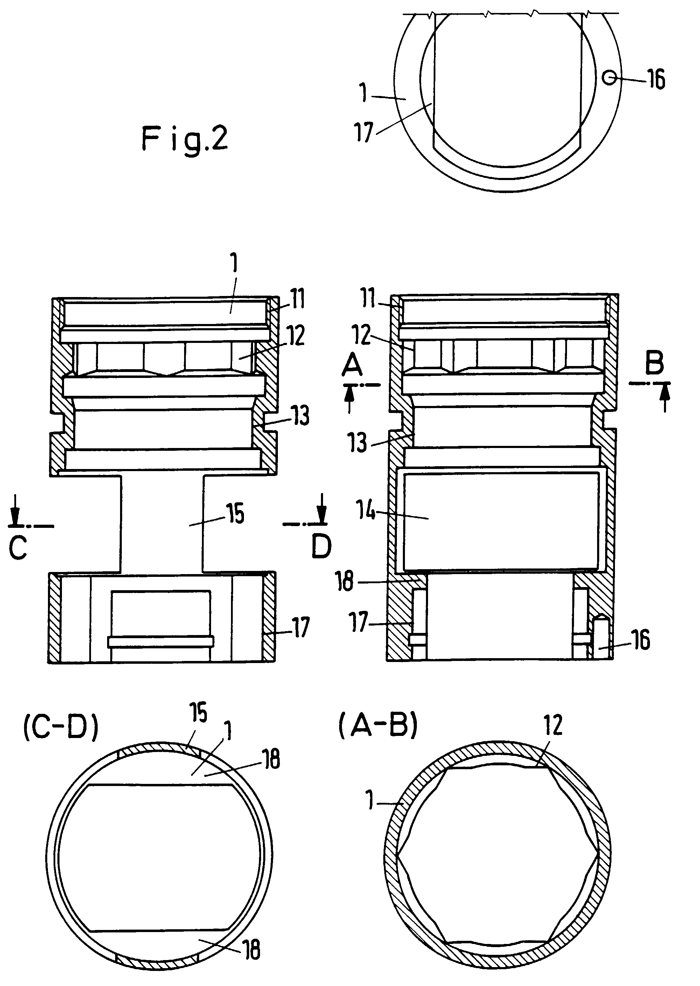

Das Außengehäuse 1 weist - Fig. 1 und 2 - spindelseitig ein Innengewinde 11 für die Aufnahme der Ringschraube 10 auf. Im Anschluß daran ist das Gehäuse 1 mit einem Innensechskant 12 für die drehsichere Fixierung von Innenhülse 2 und Kunststoffteil 20 versehen. An eine zylindrische Anlagefläche 13 für die Innenhülse 2 schließen Öffnungen 14 an. Die Öffnungen 14 sind dadurch gebildet, daß in diesem Bereich die Wandung der Außenhülse 1 nur noch durch diametral gegenüberliegende Stege 15 gebildet ist. Die Öffnungen 14 ermöglichen den seitlichen Austritt des Mischwasser aus dem Einsatz. Scheibenseitig ist in der Stirnseite des Gehäuses 1 eine parallel zur Mittelachse verlaufende Bohrung 16 für die Aufnahme eines Axialstifts zur Fixierung des Gehäuses in einem Ventil eingebracht. Innen ist das Gehäuse 1 auf dieser Seite mit einer Kontur 17 gleich den Außenkonturen von Einlaßscheibe 5 und Dichtscheibe 8 für deren Fixierung versehen. Im Anschluß daran ist eine Innenschulter 18 mit der Spindel 4 zugewandter Auflagefläche und nach innen gewandter Führungsfläche für die Volumenscheibe 7 vorgesehen.

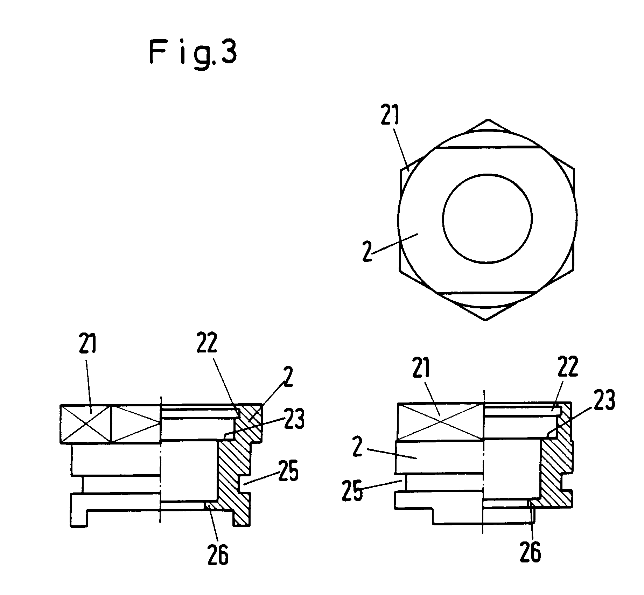

Die Innenhülse 2 weist - Fig. 1 und 3 - auf der der Spindel 4 zugewandten Seite außen einen Sechskant 21 auf, der in den Innensechskant 12 des Gehäuses 1 eingreift - Fig. 1 und 2 -. In Höhe des Sechskants 21 ist innen eine Nut 22 für die Aufnahme des Sprengrings 91 vorgesehen, im Anschluß daran eine Schulter 23, auf der der Verschlußring 92 und der Kunststoffgleitring 93 aufliegen. Der gegenüberliegenden Stirnfläche zugewandt weist die Innenhülse 2 außen eine Ringnut 25 für die Aufnahme des 0-Rings 94 auf. Innen ist an dieser Stirnseite ein Innenflansch 26 vorgesehen, auf dem der 0-Ring 95 aufliegt.

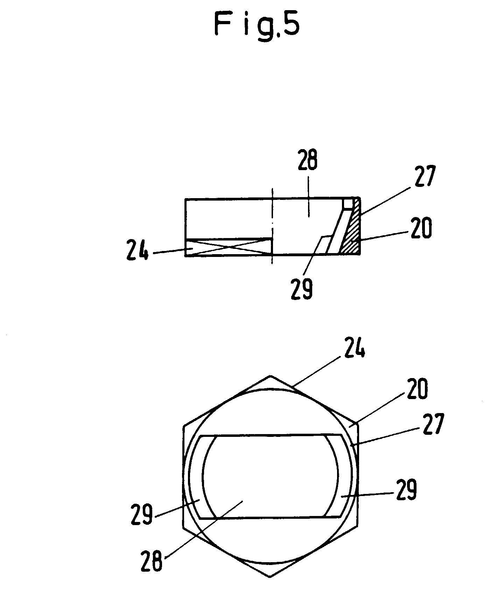

Auf der der Spindel 4 zugewandten Stirnseite der Innenhülse 2 liegt das Kunststoffteil 20 an - Fig. 1 und 5 -. Im Anlagebereich, das ist der Bereich, in dem die Innenhülse 2 den Sechskant 21 außen aufweist, weist auch das Kunststoffteil 20 einen Sechskant 24 auf, mit dem es verdrehsicher in dem Gehäuse 1 mittels des dort vorgesehen Innensechskants 12 gehalten ist. Der Sechskant 24 überragt flanschartig die Außenwand 27 des Kunststoffteils 20, sodaß dieses von der Ringschraube 10 fixiert werden kann. Innen ist das Kunststoffteil 20 mit einer länglichen Ausnehmung 28 für die Führung der Spindel 4 versehen. Die stirnseitigen Enden 29 der Ausnehmung 28 verlaufen nach innen konisch sich verjüngend.

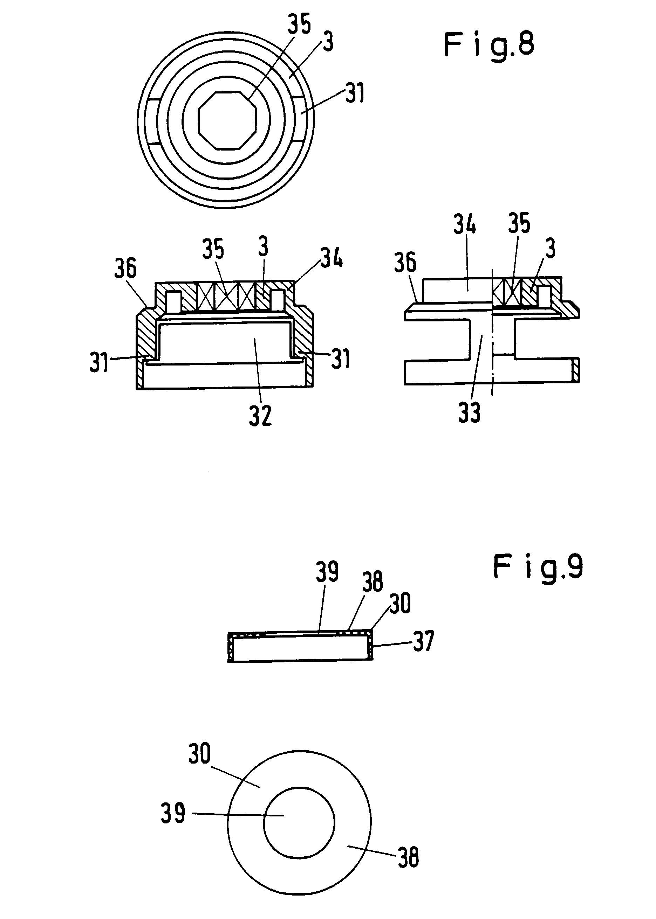

Der Korb 3 ist hülsenartig ausgebildet - Fig. 1 und 8 -. An der scheibenseitigen Stirnseite stehen Vorsprünge 31 für den Eingriff in die Stufen 62 der Temperaturscheibe 6 vor. Im Abstand von dieser Stirnseite weist auch der Korb 3 Öffnungen 32 für den Austritt des Mischwassers auf. Auch diese Öffnungen 32 sind zwischen diametral sich gegenüberliegenden, in Axialrichtung verlaufenden Stegen 33 gebildet. Die den Vorsprüngen 31 gegenüberliegende Stirnseite ist durch eine Decke 34 verschlossen. In der Decke 34 ist eine Öffnung 35 vorgesehen. Die Öffnung ist als Innenachtkant ausgebildet. Die Öffnung 35 nimmt das innere Ende der Spindel 4 auf. Die Decke 34 übergreift den übrigen Teil des Korbs 3 nach Art einer Kronenmutter. Es entsteht außen eine umlaufende Schulter 36.

Die Decke 34 ist übergriffen von dem Gleithut 30 - Fig. 1 und 9 -. Der Gleithut 30 hat die Form eines Zylinders 37, dessen eine Stirnseite offen und dessen entgegengesetzte Stirnseite mit einem Boden 38 versehen ist, der eine Öffnung 39 für den Durchtritt der Spindel 4 aufweist. Mit dem Boden 38 liegt der Gleithut 30 auf der Decke 34 des Korbs 3 auf.

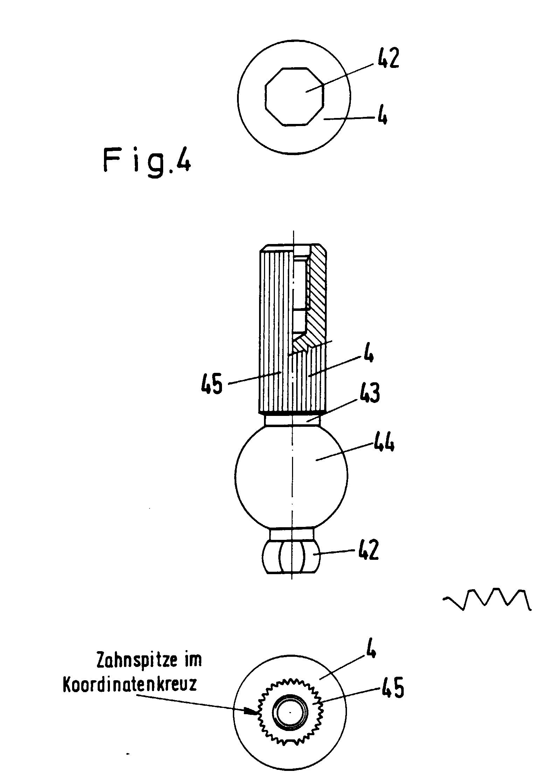

In der Innenhülse 2 ist die Spindel 4 mit Hilfe des Kunststoffgleitrings 93 gelagert - Fig. 1 und 4 -. In ihrem in die mit dem Innenachtkant versehene Öffnung 35 des Korbs 3 hineinragenden Teil ist die Spindel 4 als achtkantiger Steg 42 ausgebildet. Das Achtkantgelenk 35, 42 bewirkt die spielfreie rotatorische Bewegung des Korbs 3 bei Drehung der Spindel 4 und damit die Temperatureinstellung. Der Achtkant 42 ist einfach auf einem Drehautomaten herzustellen. Beim Schwenken der Spindel 4 drückt der achtkantige Steg 42 über die Öffnung 35 den Korb 3 in translatorische Bewegung. Diese translatorische Bewegung ist begrenzt durch die schrägen Enden 29, die an dem Kunststoffteil 20 vorgesehen sind, und an die der Temperaturbegrenzer 40 auf der Spindel 4 in seiner Endlage anschlägt. Durch Rastnocken in dem Kunststoffteil 20 kann eine Volumenstrombegrenzung eingestellt werden. Die Spindel ist in dem Bereich zwischen dem achtkantigen Steg 42 und einem zylindrischem Teil 43 als Kugel 44 ausgeführt. Mit der Kugel 44 liegt die Spindel 4 an der Innenwand der Innenhülse 2 und dem Kunststoffgleitring 93 an. Auf diese Weise ist die Weitergabe der Schwenkbewegung der Spindel 4 gewährleitet. Das äußere Ende der Spindel 4 bildet ein Mehrkant 45, auf den sowohl ein nicht dargestellter Hebel einer Mischarmatur aufsteckbar ist, als auch der Temperaturbegrenzer 40 gesteckt ist.

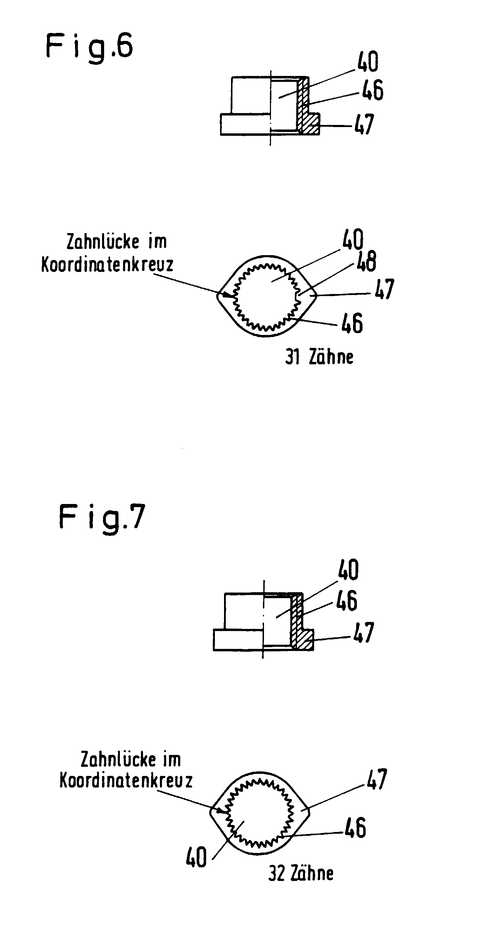

Der Temperaturbegrenzer 40 besteht aus zwei Hülsen - Fig. 1, 6 und 7 -. Jede Hülse weist in Längsrichtung einen Innenzahnkranz 46 auf, der mit dem Mehrkant 45 der Spindel 4 übereinstimmt. An den gegeneinander liegenden Enden sind die Hülsen an diametral gegenüberliegenden Seiten mit spitz zulaufenden flanschartig nach außen sich erstreckenden Vorsprüngen versehen. Mit den Vorsprüngen 47 stößt der Temperaturbegrenzer 40 an die Seitenwände des Kunststoffteils 20, welches die Spindel 4 bei der translatorischen Bewegung führt, wenn diese in Rotationsbewegung versetzt wird. Gibt man in dem Mehrkant 45 einer Längsnut die Breite zweier Zähne und gibt man andererseits dem Zahnkranz 46 des Temperaturbegrenzers 40 an einer Stelle die Breite zweier Zähne, ist die Lage des Temperaturbegrenzers 40 auf der Spindel 4 und somit der Drehwinkel der Spindel fehlerfrei fixiert. Der doppelt breite Zahn ist zweckmäßig in der Verbindungslinie der beiden Vorsprünge vorgesehen. Der so ausgebildete und angebrachte Temperaturbegrenzer 40 gewährleistet den vollen Kaltwasserzustrom und die vollständige Warmwasserabsperrung. Die Verwendung zweier Teile für den Temperaturbegrenzer 40 macht es möglich, einen Winkel zwischen den Vergrößerungen 47 der beiden Teile zueinander so zu wählen, daß die Drehbewegung der Spindel 4 weiter begrenzt wird. Zwischen der einen festen Endlage, in der der volle Kaltwasserstrom zufließt, und der anderen Endlage, in der der volle Warmwasserstrom zufließen würde, wird ein Winkel gewählt, der nur einem Warmwasser-Teilstrom den Zufluß ermöglicht. Die Mischwassertemperatur kann so nach oben begrenzt werden. Die genannte Ausgestaltung mit dem Temperaturbegrenzer 40 ist gegenüber einer Radialfräsung für Querstiftanschläge eine preiswerte Lösung.

Die Durchbrüche 54, 61 und 71 in Einlaß-, Temperatur-und Volumenscheibe 5, 6 und 7 überstreichen und überdecken sich abhängig von der durch die Spindel 4 ausgelösten Stellung des Korbs 3 bezogen auf das Gehäuse 1: In Schließ- oder Ruhestellung verschließt die - ebenso wie die Temperaturscheibe - mit dem Korb 3 verbundene Volumenscheibe 7 den Durchbruch 54 in der Einlaßscheibe 5; es kann kein Wasser den Einsatz passieren. Abhängig von dem Grad der Schwenkbewegung der Spindel 4 in Vertikalrichtung findet eine translatorische Bewegung des Korbs 3 bezogen auf das Gehäuse 1 und damit der Volumenscheibe 7 bezogen auf die Einlaßscheibe 5 statt. Die Durchbrüche 54 und 71 überdecken sich mehr oder weniger; die gewünschte Menge Mischwasser kann den Einsatz passieren und über die seitlichen Öffnungen 32 und 14 austreten. Abhängig von der Drehbewegung der Spindel 4 in Horizontalrichtung findet eine rotatorische Bewegung des Korbs 3 bezogen auf das Gehäuse 1 und damit der Temperaturscheibe 6 bezogen auf die Einlaßscheibe 5 statt. Abhängig von der Spindelstellung überdeckt der Durchbruch 61 für Warmwasser in der Temperaturscheibe 6 den zugeordneten Durchbruch 71 in der Volumenscheibe 7 zwischen vollständiger Abdeckung bis vollsständiger Öffnung; umgekehrt der Durchbruch 61 für Kaltwasser den zugeordneten Durchbruch 71 zwischen vollständiger Öffnung und vollständiger Abdeckung. Mischwasser gewünschter Temperatur wird gemischt und passiert die Durchbrüche. Die translatorische und die rotatorische Bewergung überlagern sich.

## Patentansprüche

1. Einsatz für ein Einhebel-Mischventil, mit einem ortsfesten Gehäuse (1), mit einer in dem Gehäuse (1) angeordneten Innenhülse (2), mit einem bezogen auf das Gehäuse (1) drehbaren und radial bewegbaren Korb (3), mit einer quer in der Innenhülse (2) schwenkbar gelagerten, innen in den Korb (3) eingreifenden und von außen betätigbaren Spindel (4), und mit plan aneinanderliegenden und Durchbrüche aufweisenden Scheiben, von denen eine als Einlaßscheibe (5) ausgebildet und an dem Gehäuse (1), eine andere als Steuerscheibe ausgebildet und an dem Korb (3) befestigt ist, und eine weitere als Zwischenscheibe zwischen der Einlaßscheibe (5) und der STeuerscheibe vorgesehen ist, dadurch gekennzeichnet, daß die Zwischenscheibe als Volumenscheibe (7) verwendet ist, die mit dem Korb (3) bezogen auf die Einlaßscheibe (5) radial bewegbar ist, und daß die Steuerscheibe als Temperaturscheibe (6) verwendet ist, die mit dem Korb (3) bezogen auf die Volumenscheibe (7) drehbar und zusammen mit der Volumenscheibe (7) bezogen auf die Einlaßscheibe (5) radial bewegbar ist.

2. Einsatz nach Anspruch 1, dadurch gekennzeichnet, daß die im wesentlichen kreisförmige Volumenscheibe (7) auf der Oberseite (75) als Kreisfläche, auf der Unterseite (76) als Kreisfläche größeren Durchmessers ausgeführt ist, wobei die Unterseite (76) auf gegenüberliegenden Seiten nach Art einer Sekante (77) abgeschnitten ist und zur Unterseite (76) hin zwei parallel zueinander verlaufende Absätze aufweist, mit denen die Volumenscheibe (7) entlang gleich ausgebildeter Flächen in dem Gehäuse (1) gleiten kann.

3. Einsatz nach Anspruch 2, dadurch gekennzeichnet, daß die Unterseite (76) am Übergang von der Kreisfläche in die Sekanten (77) die Oberseite (75) überragt und vier überstehende Lappen (78) aufweist.

4. Einsatz nach Anspruch 2 oder 3, dadurch gekennzeichnet, daß die Volumenscheibe (7) spiegelsymmetrisch zur Längsmittelachse zwei durch einen Steg voneinander getrennte Durchbrüche (71) aufweist, von denen jeder in der Unteransicht die Form eines Rechtecks mit abgerundeten Ecken, in der Ansicht die Form eines Trapezes aufweist, dessen Grundseite senkrecht zur Längsmittelachse verläuft.

5. Einsatz nach einem der Ansprüche 2 bis 4, dadurch gekennzeichnet, daß die Volumenscheibe (7) im Bereich der längeren Grundseite Zähne (72) aufweist, auf deren Seite der Durchbruch (71) mit einer zur Temperaturscheibe (6) sich öffnenden schrägen Wandung (73), im übrigen mit einer zu den Scheibenstirnflächen senkrechten Wandung (74) versehen ist.

6. Einsatz nach einem der Ansprüche 1 bis 5, dadurch gekennzeichnet, daß die Temperaturscheibe (6) kreisförmig ausgebildet ist und zwei spiegelsymmetrisch angeordnete sektorförmige Durchbrüche (61) aufweist, von denen der eine mit der Kaltwasser-, der andere mit der Warmwasser-Zuleitung in Verbindung steht.

7. Einsatz nach Anspruch 6, dadurch gekennzeichnet, daß die Temperaturscheibe (6) am Rand zwischen den sektorförmigen Durchbrüchen (61) auf der Oberseite eingelassene Stufen (62) aufweist, mit denen sie auf Innenschultern (31) in dem Korb (3) aufliegt.

8. Einsatz nach Anspruch 6 oder 7, dadurch gekennzeichnet, daß die Stufen (62) voneinander und von den Durchbrüchen (61) getrennt sind, deren Wände (64) senkrecht zu den Grundflächen verlaufen.

9. Einsatz nach einem der Ansprüche 1 bis 8, dadurch gekennzeichnet, daß die Einlaßscheibe (5) in ihrem Umriß aus zwei diametral gegenüberliegenden Teilkreisen (51) größeren Durchmessers und zwei zwischen den Teilkreisen (51) größeren Durchmessers angeordneten Teilkreisen (52) kleineren Durchmessers gebildet ist, die durch Gerade (53) miteinander verbunden sind.

10. Einsatz nach Anspruch 9, dadurch gekennzeichnet, daß die Einlaßscheibe (5) zwei spiegelsymmetrisch zu ihrer Längsmittelachse angeordnete Durchbrüche (54) aufweist, von denen einer mit der Kaltwasser-, der andere mit der Warmwasser-Zuleitung in Verbindung steht und die auf der Unterseite der Einlaßscheibe (5) kreisförmig, auf der Oberseite rechteckig mit abgerundeten Ecken ausgebildet sind, wobei die Durchbrüche (54) auf der Oberseite gegenüber der Unterseite zur Längsmittelachse versetzt angeordnet, in einer Querschnittsebene trapezförmig und in der anderen parallelogrammartig ausgebildet sind.

11. Einsatz nach einem der Ansprüche 1 bis 10, dadurch gekennzeichnet, daß an der Einlaßscheibe (5) eine die Einlaßseite des Einsatzes bildende Dichtscheibe (8) anliegt, die von dem Gehäuse (1) gehalten ist und die gleiche Kontur aufweist wie die Einlaßscheibe (5).

12. Einsatz nach Anspruch 11, dadurch gekennzeichnet, daß die Dichtscheibe (8) mit zwei spiegelsymmetrisch angeordneten kreisförmigen Öffnungen (81) versehen ist, die kongruent kreisförmigen Durchbrüchen (54) der Einlaßscheibe (5) auf der anliegenden Seite sind.

13. Einsatz nach Anspruch 10 oder 11, dadurch gekennzeichnet, daß die Dichtscheibe (8) am Rand der Durchbrüche (81) auf der der Einlaßscheibe (5) abgewandten Seite mit Lippen (84) sowie auf der zugewandten Seite mit zwei an die Kreise kleineren Durchmessers anschließenden Absätzen (82) versehen ist.

14. Einsatz nach einem der Ansprüche 1 bis 13, dadurch gekennzeichnet, daß das Außengehäuse (1) spindelseitig ein Innengewinde (11) für die Aufnahme einer Ringschraube (10) aufweist, von der ein Formteil gehalten ist, das an der spindelseitigen Stirnseite der Innenhülse (2) anliegt.

15. Einsatz nach Anspruch 14, dadurch gekennzeichnet, daß das Außengehäuse (1) im Anschluß an das Innengewinde (11) mit einem Innensechskant (12) versehen ist, der übereinstimmt mit einem Außensechskant (21) der Innenhülse (2) sowie einem Außensechskant (2) des Kunststoffteils (20).

16. Einsatz nach Anspruch 14 oder 15, dadurch gekennzeichnet, daß das Kunststoffteil (20) für die Führung der Spindel (4) mit einer länglichen Ausnehmung (28) versehen ist, deren stirnseitige Enden (29) nach innen konisch sich verjüngend verlaufen.

17. Einsatz nach einem der Ansprüche 1 bis 16, dadurch gekennzeichnet, daß der Korb (3) hülsenartig ausgebildet und spindelseitig durch eine Decke (34) verschlossen ist, in der eine Öffnung (35) vorgesehen ist, die als Innenachtkant ausgebildet ist und das innere, als achtkantiger Steg (42) ausgebildete Ende der Spindel (4) aufnimmt.

18. Einsatz nach Anspruch 17, dadurch gekennzeichnet, daß die Decke (34) des Korbs (3) von einem Gleithut (30) übergriffen ist, der die Form eines Zylinders (37) aufweist, dessen eine Stirnseite offen und dessen entgegengesetzte Stirnseite mit einem Boden (34) versehen ist, der eine Öffnung (39) für den Durchtritt der Spindel (4) aufweist.

19. Einsatz nach einem der Ansprüche 1 bis 18, dadurch gekennzeichnet, daß die Spindel (4) mittig als Kugel (44) ausgeführt ist, mit der sie einerseits an einem in der Innenhülse (2) gehaltenen Kunststoffgleitring (93), andererseits an einem ebenfalls von der Innenhülse (2) gehaltenen 0-Ring (95) und zwischen beiden an der Innenhülse (2) selbst anliegt.

20. Einsatz flach einem der Ansprüche 1 bis 19, dadurch gekennzeichnet, daß auf das freie Ende der Spindel (4) ein Temperaturbegrenzer (40) gesteckt ist.

21. Einsatz nach Anspruch 20, dadurch gekennzeichnet, daß der Temperaturbegrenzer (40) mindestens eine Hülse aufweist, die in Längsrichtung mit einem Innenzahnkranz (46) versehen ist, der mit dem Mehrkant (45) der Spindel (4) übereinstimmt.

22. Einsatz nach Anspruch 20 oder 21, dadurch gekennzeichnet, daß die Hülse an einem Ende an diametral gegenüberliegenden Seiten mit spitz zulaufenden flanschartig nach außen sich erstreckenden Vorsprüngen (47) versehen ist, mit denen der Temperaturbegrenzer (40) an die Seitenwände des Kunststoffteils (20) am Ende einer Drehbewegung der Spindel (4) anschlägt.

23. Einsatz nach einem der Ansprüche 20 bis 22, dadurch gekennzeichnet, daß wenigstens eine der Hülsen des Temperaturbegrenzers (40) einen doppelt breiten Zahn (48) aufweist, der in eine gleich breite Nut des Mehrkants (45) eingreift.

## Claims

1. Holder for a single-lever mixer valve, with a fixed housing (1), with an inner sleeve (2) arranged in the housing (1), with a cage (3) which can move radially and can rotate with respect to the housing (1), with a spindle (4) which is transversely swivel-mounted in the inner sleeve (2), engages internally in the cage (3) and can be actuated from outside, and with discs which adjoin each other in a flat manner and have openings, one of which discs is in the form of an inlet disc (5) and is fixed to the housing (1), another of which is in the form of a control disc and is fixed to the cage (3), and a further of which is provided as an intermediate disc between the inlet disc (5) and the control disc, characterized in that the intermediate disc is used as the volume disc (7) which can be moved radially with the cage (3) with respect to the inlet disc (5), and that the control disc is used as the temperature disc (6) which can be rotated with the cage (3) with respect to the volume disc (7) and can move radially together with the volume disc (7) with respect to the inlet disc (5).

2. Holder according to Claim 1, characterized in that the substantially circular volume disc (7) is in the form of a circle on the upper side (75), a circle of larger diameter on the underside (76), wherein the underside (76) is cut in the manner of a secant (77) on opposite sides and in the direction of the underside (77) has two shoulders running parallel to each other with which the volume disc (7) can slide along identically formed surfaces in the housing (1).

3. Holder according to Claim 2, characterized in that at the transition from the circle to the secants (77) the underside (76) projects over the upper side (75) and has four projecting laps (78).

4. Holder according to Claim 2 or 3, characterized in that in an axially symmetrical manner with respect to the longitudinal centre axis the volume disc (7) has two openings (71) separated from each other by a web, each of which opening has the shape of a rectangle with rounded corners in the bottom view and the shape of a trapezium in the top view, the base side of which runs perpendicular to the longitudinal centre axis.

5. Holder according to one of Claims 2 to 4, characterized in that in the region of the longer base side the volume disc (7) has teeth (72) on whose side the opening (71) is provided with an inclined wall (73) opening towards the temperature disc (6) and otherwise with a wall (74) perpendicular to the front faces of the discs.

6. Holder according to one of Claims 1 to 5, characterized in that the temperature disc (6) is circular in form and has two sector-shaped openings (61) arranged in an axially symmetrical manner, one of which openings is connected to the cold water supply and the other to the hot water supply.

7. Holder according to Claim 6, characterized in that on the edge between the sector-shaped openings (61) the temperature disc (6) has steps (62) let in on the upper side with which it rests on internal shoulders (31) in the cage (3).

8. Holder according to Claim 6 or 7, characterized in that the steps (62) are separated from each other and from the openings (61), the walls (64) of which run perpendicular to the base surfaces.

9. Holder according to one of Claims 1 to 8, characterized in that in its contour the inlet disc (5) is formed from two diametrically opposite partial circles (51) of larger diameter and two partial circles of smaller diameter arranged between the partial circles (51) of larger diameter, which are connected together by straight line (53).

10. Holder according to Claim 9, characterized in that the inlet disc (5) has two openings (54) arranged in an axially symmetrical manner with respect to its longitudinal centre axis, one of which is connected to the cold water supply, the other to the hot water supply, and which are circular on the underside of the inlet disc (5) and rectangular with rounded corners on the upper side, wherein the openings (54) on the upper side are arranged offset with respect to the longitudinal centre axis compared with the underside, are trapezium-shaped in a cross-sectional plane and like a parallelogram in the other.

11. Holder according to one of Claims 1 to 10, characterized in that a sealing disc (8) which forms the inlet side of the holder, is retained by the housing (1) and has the same contour as the inlet disc (5) adjoins the inlet disc (5).

12. Holder according to Claim 11, characterized in that the sealing disc (8) is provided with two circular openings (81) arranged in an axially symmetrical manner, which openings are congruently circular openings (54) of the inlet disc (5) on the adjoining side.

13. Holder according to Claim 10 or 11, characterized in that on the edge of the openings (81) the sealing disc (8) is provided with lips (84) on the side facing away from the inlet disc (5) as well as with two shoulders (82) adjoining the circles of smaller diameter on the side facing the inlet disc.

14. Holder according to one of Claims 1 to 13, characterized in that on the spindle side the external housing (1) has an internal thread (11) to receive an eye bolt (10) by which a moulded part is retained which adjoins the front face of the inner sleeve (2) on the spindle side.

15. Holder according to Claim 14, characterized in that the external housing (1) is provided with an internal hexagon (12) adjoining the internal thread (11), which internal hexagon coincides with an external hexagon (21) of the inner sleeve (2) as well as an external hexagon (2) of the plastic part (20).

16. Holder according to Claim 14 or 15, characterized in that for the guide of the spindle (4) the plastic part (20) is provided with an oblong recess (28), the front ends (29) of which run inwards in a conically tapering manner.

17. Holder according to one of Claims 1 to 16, characterized in that the cage (3) is formed in a sleeve-like manner and is closed on the spindle side by means of a cover (34) in which an opening (35) is provided which is formed as an internal octagon and receives the inner end of the spindle (4) which has the form of an octagonal web (42).

18. Holder according to Claim 17, characterized in that the cover (34) of the cage (3) is overlapped by a sliding cap (30) which has the shape of a cylinder (37), the one front face of which is open and the opposite front face provided with a base (34) which has an opening (39) for the passage of the spindle (4).

19. Holder according to one of Claims 1 to 18, characterized in that in the centre the spindle (4) has the form of a ball (44) with which it adjoins a plastic sliding ring (93) retained in the inner sleeve (2) on the one hand, an O-ring (95) also retained by the inner sleeve (2) on the other hand and the inner sleeve (2) itself between both.

20. Holder according to one of Claims 1 to 19, characterized in that a temperature limiter (40) is placed on the free end of the spindle (4).

21. Holder according to Claim 20, characterized in that the temperature limiter (40) has at least one sleeve which is provided in the longitudinal direction with an internal toothed ring (46) which coincides with the polygon (45) of the spindle (4).

22. Holder according to Claim 20 or 21, characterized in that at one end and on diametrically opposite sides the sleeve is provided with projections (47) which taper to a point and extend outwards in a flange-like manner, with which projections the temperature limiter (40) strikes the side walls of the plastic part (20) at the end of a rotary movement of the spindle (4).

23. Holder according to one of Claims 20 to 22, characterized in that at least one of the sleeves of the temperature limiter (40) has a double-width tooth (48) which engages in a groove of the polygon (45) which has the same width.

## Revendications

1. Insert pour un mitigeur à monocommande, comprenant un boîtier fixe (1), une douille inférieure (2) disposée à l'intérieur du boîtier (1), un panier (3) tournant et radialement mobile par rapport au boîtier (1), une broche (4) montée transversalement et de manière pivotante dans la douille intérieure (2), qui s'engage intérieurement dans le panier (3) et peut être actionnée de l'extérieur, et des disques plans appliquées les uns contre les autres et présentant des ajours, dont l'un est conformé en disque d'entrée (5) et fixé sur le boîtier (1), alors qu'un autre est conformé en disque de commande et fixé sur le panier (3) et qu'un troisième disque est prévu comme disque intermédiaire entre le disque d'entrée (5) et le disque de commande, **caractérisée en ce** que le disque intermédiaire est utilisé comme disque volumétrique (7) qui peut être déplacé, conjointement avec le panier (3), radialement par rapport au disque d'entrée (5), et que le disque de commande est utilisé comme disque thermorégulateur (6) lequel petit être tourné avec le panier (3) par rapport au disque volumétrique (7) et déplacé radialement, conjointement avec le disque volumétrique (7); par rapport au disque d'entrée (5).

2. Insert selon la revendication 1, caractérisé en ce que le disque volumétrique (7) de forme sensiblement circulaire présente sur la surface supérieure (75) une forme de surface circulaire et, sur la surface inférieure (76), une forme de surface circulaire d'un diamètre plus grand, la surface inférieure (76) étant coupée sur des côtés opposés à la manière d'une sécante (77) et présentant en direction de la surface inférieure (76) deux talons parallèles avec lesquels le disque volumétrique (7) peut coulisser dans le boîtier (1) le long de surfaces de conformation identique.

3. Insert selon la revendication 2, caractérisé en ce qu'à la transition entre la surface circulaire et les sécantes (77), la surface inférieure (76) dépasse de la surface supérieure (75) et présente quatre pattes (78) en saillie.

4. Tnsert selon la revendication 2 ou 3, caractérisé en ce que le disque volumétrique (7) présente, symétriquement par rapport à l'axe longitudinal médian, deux ajours (71) séparés l'un de l'autre par une barrette, dont chacun présente, vu de dessous, la forme d'un rectangle avec des coins arrondis et, en projection la forme d'un trapèze dont la base est orientée perpendiculairement à l'axe longitudinal médian.

5. Insert selon l'une des revendications 2 à 4, caractérisé en ce que le disque volumétrique que (7) présente dans la région de la surface de base plus longue, des dents (72) sur le côté desquelles l'ajour (71) est muni d'une paroi inclinée (73) qui s'ouvre en direction du disque thermorégulateur (6), et présente par ailleurs une paroi (74) orientée perpendiculairement aux surfaces frontales du disque.

6. Insert selon l'une des revendications 1 à 5, caractérisé en ce que le disque thermorégulateur (6) est de forme circulaire et présente deux ajours (61) en forme de secteurs disposés en symétrie spéculaire, dont l'un communique avec la conduite d'arrivée d'eau froide et l'autre, avec la conduite d'arrivée d'eau chaude.

7. Insert selon la revendication 6, caractérisé en ce que le disque thermorégulateur (6) est pourvu sur le bord, entre les ajours (61) en forme de secteurs, de gradins (62) encastrés dans la surface supérieure, avec lesquels il repose sur des épaulements intérieurs (31) dans le panier (3).

8. Insert selon la revendication 6 ou 7, caractérisé en ce que les gradins (62) sont séparés l'un de l'autre et des ajours (61) dont les parois (64) sont orientées perpendiculairement aux surfaces de base.

9. Insert selon l'une des revendications 1 à 8, caractérisé en ce que le contour du disque d'entrée (5) est constitué de deux cercles partiels (51) diamétralement opposés d'un diamètre plus grand et de deux cercles partiels (52) d'un diamètre plus petit situés entre les cercles partiels (51) de diamètre plus grand, qui sont reliés entre eux par des droites (53).

10. Insert selon la revendication 9, caractérisé en ce que le disque d'entrée (5) présente deux ajours (54) disposés à symétrie spéculaire par rapport à son axe longitudinal médian, dont l'un communique avec la conduite d'arrivée d'eau froide et l'autre, avec la conduite d'arrivée d'eau chaude et qui présentent sur la surface inférieure du disque d'entrée (5) une forme circulaire et sur la surface supérieure, une forme rectangulaire avec des coins arrondis, les ajours (54) sur la surface supérieure présentant par rapport à la surface inférieure un décalage par rapport à l'axe longitudinal médian, une conformation trapézoïdale dans l'un des plan de section transversale et en parallélogramme dans l'autre.

11. Insert selon l'une des revendications 1 à 10, caractérisé en ce que contre le disque d'entrée (5) est appliqué un disque d'étanchéité (8) qui forme le côté entrée de l'insert, est maintenu par le boîtier (1) et présente le même contour que le disque d'entrée (5).

12. Insert selon la revendication 11, caractérisé en ce que le disque d'étanchéité (8) comporte deux ouvertures circulaires (81) disposées en image de miroir qui sont congruentes à des ajours circulaires (54) du disque d'entrée (5) sur le côté de contact.

13. Insert selon la revendication 10 ou 11, caractérisé en ce que le disque d'étanchéité (8) présente sur le bord des ajours (81), sur le côté détourné du disque d'entrée (5), des lèvres (84) et, sur le côté tourné vers ledit disque d'entrée, deux décrochements (82) qui font suite aux cercles de diamètre inférieur.

14. Insert selon l'une des revendications 1 à 13, caractérisé en ce que le boîtier extérieur (1) présente, du côté broche, un filetage intérieur (11) pour la réception d'un anneau à vis (10) par lequel est maintenu une pièce moulée qui est appliquée contre la surface frontale, côté broche, de la douille intérieure (2).

15. Insert selon la revendication 14, caractérisé en ce que le boîtier extérieur (1) comporte, à la suite du filetage intérieur (11), un six pans creux (12) qui concorde avec un hexagone mâle (21) de la douille intérieure (2) ainsi qu'avec un hexagone mâle (2) de l'élément en matière plastique (20).

16. Insert selon la revendication 14 ou 15, caractérisé en ce que l'élément en matière plastique (20) pour le guidage de la broche (4) est muni d'un évidement (28) allongé dont les extrémités frontales (29) présentent un rétrécissement conique vers l'intérieur.

17. Insert selon l'une des revendications 1 à 16, caractérisé en ce que le panier (3) est conformé en douille et fermé du côté broche par une couverture (34) dans laquelle est prévue une ouverture (35) qui est conformée en six pans creux et reçoit l'extrémité intérieure de la broche (4) réalisée sous la forme d'une barrette octogonale (42).

18. Insert selon la revendication 17, caractérisé en ce que la couverture (34) du panier (3) est recouverte d'un chapeau coulissant (30) qui présente la forme d'un cylindre (37) dont l'une des surfaces frontales est ouverte et dont la surface frontale opposée est munie d'un fond (34) avec une ouverture (39) pour le passage de la broche (4).

19. Insert selon l'une des revendicatiuns 1 à 18, caractérisé en ce que la partie centrale de la broche (4) est conformée en boule (44) avec laquelle ladite broche est appliquée d'une part contre un anneau de glissement en matière plastique (93) maintenu dans la douille intérieure (2) et, d'autre part, contre un joint torique (95) également maintenu par la douille intérieure (2) et, entre les deux, contre la douille intérieure (2) elle-même.

20. Insert selon l'une des revendications 1 à 19, caractérisé en ce que sur l'extrémité libre de la broche (4) est emboîté un limiteur de température (40).

21. Insert selon la revendication 20, caractérisé en ce que le limiteur de température (40) comporte au moins une douille qui porte dans la direction longitudinale une couronne dentée intérieure (46) laquelle concorde avec le polygone (45) de la broche (4).

22. Insert selon la revendication 20 ou 21, caractérisé en ce que la douille présente à l'une des extrémités, sur des côtés diamétralement opposés, des saillies (47) effilées qui s'étendent vers l'extérieur à la manière d'une bride et avec iesqiJell-es le limiteur de t.empérature (40) bute à la fin d'un mouvement de rotation de la broche (4) contre les parois latérales de l'élément en matière plastique (20).

23. Insert selon l'une des revendications 20 à 22, caractérisé en ce qu'au moins l'une des douilles dit limiteur de température (40) prèsente une dent (48) de double largeur laquelle s'engage dans une encoche de même largeur du polygone (45).
